# EUROPEAN PATENT APPLICATION

(11) **EP 4 550 543 A1**
(43) Date of publication of application: **07.05.2025**
(21) Application number: 23850262.9
(22) Date of filing: 30.06.2023
(51) Int. Cl.: H01M 50/24, H01M 50/503, H01M 50/519, H01R 13/533

(54) **BATTERY MODULE**

(30) Priority: 01.08.2022 KR 20220095709; 09.05.2023 KR 20230060104
(71) Applicant: LG Energy Solution, Ltd., Seoul 07335 (KR)
(72) Inventor: KIM, Sung Gyu, Daejeon 34122 (KR)
(74) Representative: Plasseraud IP
(86) International application number: PCT/KR2023/009257
(87) International publication number: WO 2024/029752

(57) **Abstract**

The present invention relates to a battery module capable of preventing or delaying a loss of a connector due to flame generated therein to delay thermal propagation to the outside.

A battery module according to the present invention may include cell assemblies, each of which includes a plurality of cells, a busbar frame on which a busbar configured to electrically connect the cell assemblies to each other is disposed, an endplate disposed on each of both ends of the cell assembly to cover the busbar frame, a circuit board that is in contact with the busbar so as to be electrically connected to the cell assembly, a connector configured to electrically connect the circuit board to the outside, and a protective plate disposed between the circuit board and the connector to protect the connector from being deformed due to heat.

## Description

### TECHNICAL FIELD

### CROSS-REFERENCE TO RELATED APPLICATION

The present application claims the benefit of the priority of Korean Patent Application Nos. 10-2022-0095709, filed on August 1, 2022, and 10-2023-0060104, filed on May 9, 2023, which are hereby incorporated by reference in their entirety.

### TECHNICAL FIELD

The present invention relates to a battery module, and more particularly, to a secondary battery module including a plurality of cells.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Recently, as the need for large-capacity structures in addition to the use as an energy storage source are increasing, demands for battery packs in which a plurality of secondary batteries or battery modules are aggregated is increasing, and thus, demands for battery modules are also increasing.

There may be a case in which heat is generated in a cell due to use of a battery module, as a result, flame is spread. The battery module according to the related art has a problem in that a connector of the battery module is destroyed due to the flame generated in the battery module. In addition, there is a problem that thermal propagation is accelerated to other adjacent battery modules through a space generated due to the loss of the connector.

Thus, in order to solve this problem, there is a need for the battery module capable of preventing the connector from being damaged due to the internal flame.

### DISCLOSURE OF THE INVENTION

### TECHNICAL PROBLEM

The present invention has been invented to solve the above problem, and an object of the present invention is to provide a battery module capable of preventing or delaying a loss of a connector due to flame generated therein to delay thermal propagation to the outside.

### TECHNICAL SOLUTION

A battery module according to the present invention may include cell assemblies, each of which includes a plurality of cells, a busbar frame on which a busbar configured to electrically connect the cell assemblies to each other is disposed, an endplate disposed on each of both ends of the cell assembly to cover the busbar frame, a circuit board that is in contact with the busbar so as to be electrically connected to the cell assembly, a connector configured to electrically connect the circuit board to the outside, and a protective plate disposed between the circuit board and the connector to protect the connector from being deformed due to heat.

The connector may include a terminal part including a plurality of terminals that are in contact with the circuit board so as to perform electrical connection, and a housing configured to cover a side surface of the terminal part.

The battery module may further include an insulating case comprising an insulating material and disposed between the endplate and the busbar frame to cover a portion of the housing.

The protective plate may include a potting part disposed at a position corresponding to a portion at which the terminal part is disposed, and the terminal may extend to pass through the potting part.

The potting part may be formed through silicon potting.

The protective plate may further include a metal part configured to cover one surface of the connector, which faces the potting part, together with the potting part.

The protective plate may further include a bent part disposed on each of both ends of the metal part and having a bent shape.

The end plate may include a corresponding part disposed at a position corresponding to the bent part and bent in a shape corresponding to the bent part.

The circuit board may include a reinforcement plate that is in contact with the terminal and disposed on one surface facing the protective plate.

The connector may further include a fixing part connected to both ends of the housing and fixed to the busbar frame.

The fixing part may have a coupling hole that passes from one surface facing the busbar frame to the other surface, wherein the fixing part may be fixed to the busbar frame while a connection member is inserted into the coupling hole.

The circuit board may include a printed circuit board (PCB).

The circuit board may include a flexible printed circuit board (FPCB).

The bent part may be disposed to be caught on the corresponding part so as to be prevented from moving toward the connector.

### ADVANTAGEOUS EFFECTS

The battery module according to the present invention may include the cell assemblies, each of which includes the plurality of cells, the busbar frame on which the busbar electrically connecting the cell assemblies to each other is disposed, the endplate disposed on each of both the ends of the cell assembly to cover the busbar frame, the circuit board that is in contact with the busbar so as to be electrically connected to the cell assembly, the connector electrically connecting the circuit board to the outside, and the protective plate disposed between the circuit board and the connector to protect the connector from being deformed due to the heat.

Therefore, the connector may be prevented and delayed from being destroyed due to the flame generated in the battery module.

In addition, the connector of the battery module may be prevented from protruding out of the battery module.

In addition, the thermal propagation from the battery module to the adjacent battery module may be delayed.

The effects of the prevent invention are not limited by the aforementioned description, and thus, more varied effects are involved in this specification.

### BRIEF DESCRIPTION OF THE DRAWINGS

FIG. 1 is a schematic exploded perspective view of a battery module according to Embodiment 1 of the present invention.
FIG. 2 is a schematic perspective view illustrating the battery module according to Embodiment 1 of the present invention.
FIG. 3 is an schematic enlarged view illustrating a portion A of FIG. 2.
FIG. 4 is a schematic perspective view illustrating a state before an endplate is assembled in FIG. 3.
FIG. 5 is a schematic perspective view illustrating a circuit board of the battery module according to Embodiment 1 of the present invention.
FIG. 6 is a schematic perspective view illustrating a connector of the battery module according to Embodiment 1 of the present invention.
FIG. 7 is a schematic perspective view illustrating a state when a cross-section taken along line B-B' of FIG. 4 is viewed from the front.
FIG. 8 is a schematic perspective view illustrating a state before an endplate is assembled in a battery module according to Embodiment 2 of the present invention.
FIG. 9 is a schematic perspective view illustrating a protective plate of the battery module according to Embodiment 2 of the present invention.
FIG. 10 is a schematic perspective view illustrating a state in which a connector and the protective plate of the battery module are coupled to each other according to Embodiment 2 of the present invention.
FIG. 11 is a schematic perspective view illustrating a state when a cross-section taken along line C-C' of FIG. 8 is viewed from the front.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

The present invention provides a battery module as Embodiment 1.

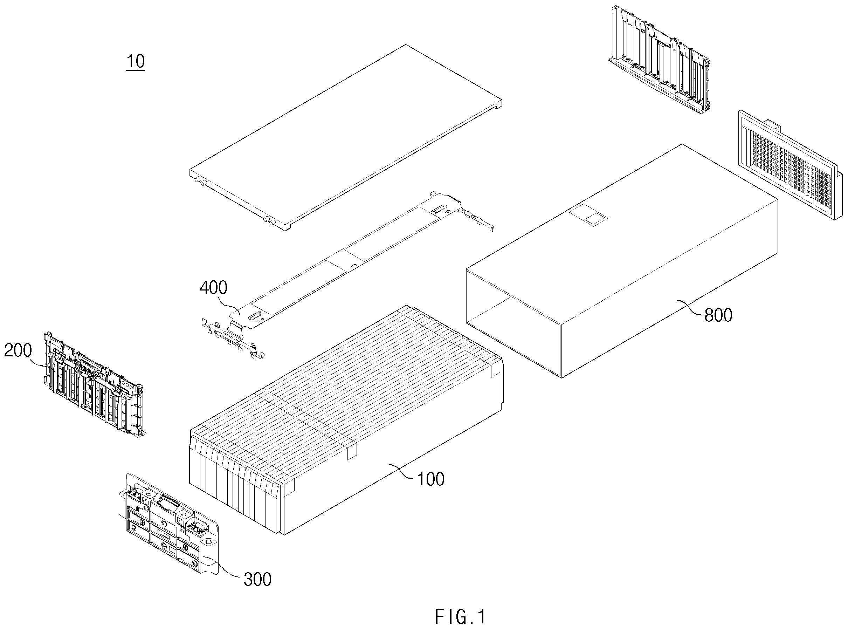

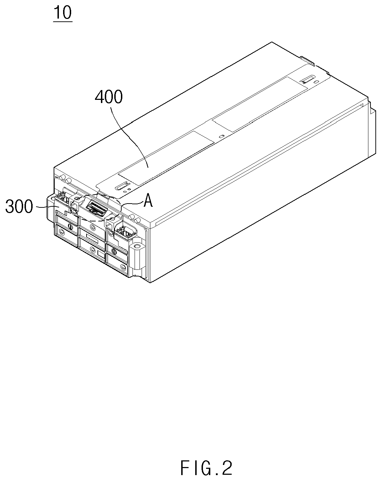

FIG. 1 is a schematic exploded perspective view of a battery module 10 according to Embodiment 1 of the present invention, and FIG. 2 is a schematic perspective view illustrating the battery module 10 according to Embodiment 1 of the present invention.

Referring to FIGS. 1 and 2, the battery module 10 according to Embodiment 1 of the present invention may include cell assemblies 100, a busbar frame 200, an endplate 300, a circuit board 400, and a connector 500, and a protective plate 600.

In each of the cell assemblies 100 of the battery module 10, the predetermined number of cells may be stacked to generate electrical energy. Here, the cells constituting the cell assembly 100 may mean one secondary battery. Here, the cell may be a pouch cell. Specifically, in the cell assembly 100, the plurality of cells may be stacked side by side in parallel to each other.

The busbar frame 200 may be disposed on one end or both ends of the cell assembly 100 according to Embodiment 1 of the present invention.

The busbar may be connected to an electrode lead of the cell assembly 100 to electrically connect the cell assemblies 100 to each other, and the busbar may be disposed on the busbar frame 200.

The endplate 300 of the battery module 10 according to Embodiment 1 of the present invention may be disposed at each of both the ends of the cell assembly 100. Specifically, the endplates 300 may be placed at opposite sides of the cell assembly 100 with the busbar frame 200 therebetween.

The battery module 10 according to Embodiment 1 of the present invention may further include a frame 800. The frame 800 may be disposed to surround the cell assembly 100. The frame 800 may be coupled to the endplate to protect the cell assembly 100. Here, the endplate 300 may be coupled to the frame 800 to protect the busbar disposed therein. A shape of the frame 800 described in the present invention is only an example, and the frame 800 may have various shapes capable of protecting the cell assembly 100.

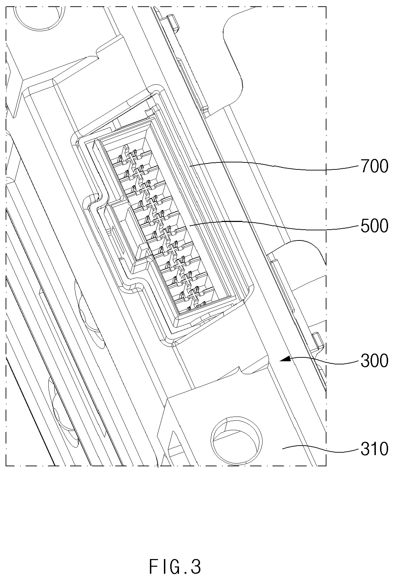

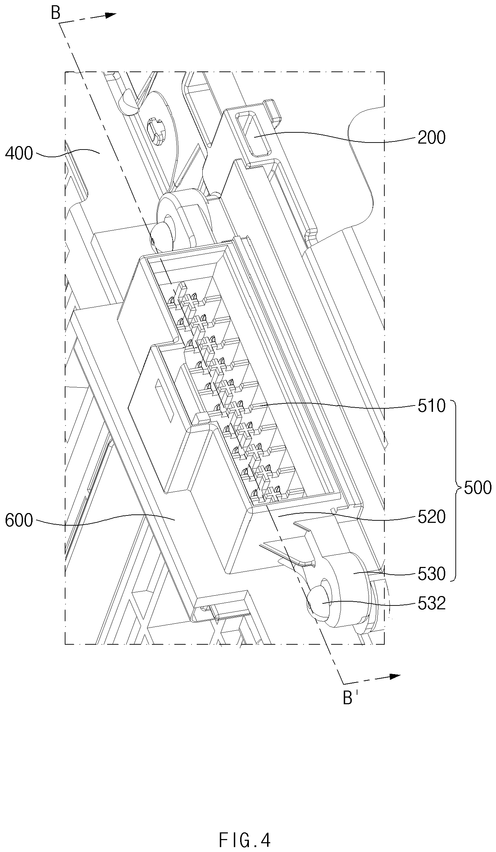

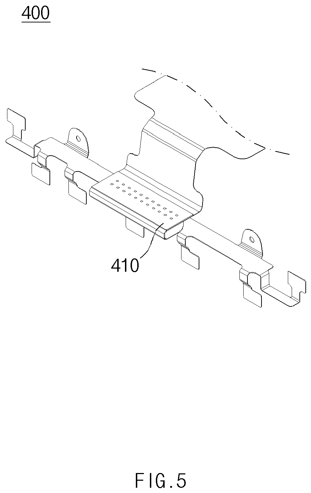

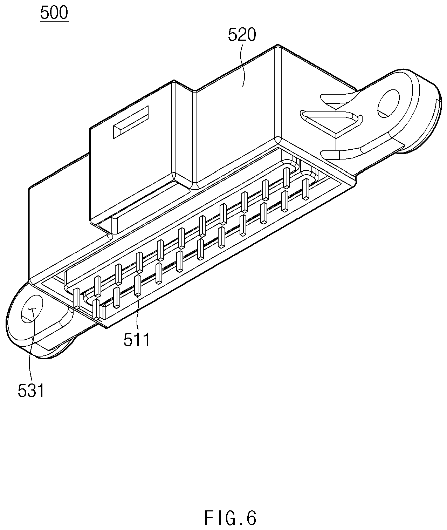

FIG. 3 is an schematic enlarged view illustrating a portion A of FIG. 2, and FIG. 4 is a schematic perspective view illustrating a state before the endplate 300 is assembled in FIG. 3. FIG. 5 is a schematic perspective view illustrating the circuit board 400 of the battery module 10 according to Embodiment 1 of the present invention, and FIG. 6 is a schematic perspective view illustrating the connector 500 of the battery module 10 according to Embodiment 1 of the present invention.

The circuit board 400 of the battery module 10 according to Embodiment 1 of the present invention may be in contact with the busbar. The circuit board 400 may be in contact with the busbar connected to the electrode lead of the cell assembly 100 so as to be electrically connected to the cell assembly 100.

The circuit board 400 may have a shape extending in a longitudinal direction of the cell assembly 100 and may include a central portion disposed at an upper portion of the cell assembly 100 and ends disposed on both distal ends of the central portion. The present invention deals in detail with an arrangement relationship between the ends of the circuit board 400 and other components.

The circuit board 400 according to Embodiment 1 of the present invention may be a printed circuit board (PCB). Specifically, the circuit board 400 may be a flexible printed circuit board (FPCB). Thus, the circuit board 400 according to Embodiment 1 of the present invention may have excellent ductility, be easy to be molded into a desired shape, and have a thin plate shape, which is advantageous in terms of space utilization.

As an example of a configuration for enhancing structural stability, the circuit board 400 of the battery module 10 according to Embodiment 1 of the present invention may include a reinforcement plate 410.

Referring to FIG. 5, the reinforcement plate 410 may be disposed on one surface facing the protective plate 600, which will be described later, at the end of the circuit board 400. In addition, the reinforcement plate 410 may be disposed to be in contact with the protective plate 600 and may be in contact with terminals 511 provided in the terminal part 510 of the connector 500, which will be described later.

The portion of the reinforcement plate 410, which is in contact with the terminals 511, may have to be electrically connected to the terminals 511 and thus may be made of a conductor. In addition, the reinforcement plate 410 may have a thin plate shape and specifically may have a plate shape with a substantially rectangular cross-section.

If the protective plate 600 is disposed on a surface of the circuit board 400, which has weak rigidity, there is a risk that structural stability is weakened. Thus, the structural stability may be supplemented by disposing the reinforcement plate 410 so as to be in contact with the protective plate 600.

The connector 500 of the battery module 10 according to Embodiment 1 of the present invention may electrically connect the circuit board 400 to the outside.

Referring to FIG. 3, the connector 500 may be disposed to be exposed to the outside through an opened space defined in the endplate 300. In addition, the connector 500 may be disposed to be in contact with the circuit board 400. The electrical energy generated by the battery module 10 may be transmitted to the outside through the connector 500.

As an example of a configuration for efficient electrical connection with the circuit board 400, the connector 500 of the battery module 10 according to Embodiment 1 of the present invention may include a terminal part 510 and a housing 520.

The terminal part 510 of the connector 500 may include a plurality of terminals 511 that is in direct contact with the circuit board 400 for the electrical connection. Each of the terminals 511 may have a shape extending in a width direction of the connector 500. In addition, each terminal 511 may have a substantially bar shape.

Referring to FIG. 6, the housing 520 may be provided to cover a side surface of the terminal part 510. Specifically, the housing 520 may have a shape of which both surfaces facing each other in an extension direction of the terminal part 510 are opened, and other side surfaces are covered. The terminal 511 of the terminal part 510 may be connected to the outside and the circuit board 400 through both the opened surfaces.

As an example of a configuration for the connection to the busbar frame 200, the connector 500 of the battery module 10 according to Embodiment 1 of the present invention may further include a fixing part 530.

Referring to FIG. 6, the fixing part 530 may be connected to both ends of the housing 520 of the connector 500. Specifically, the fixing part 530 may be provided in a shape extending in a direction away from the housing 520. More specifically, the fixing part 530 may be disposed adjacent to the busbar frame 200 at both the ends of the housing 520 for the connection to the busbar frame 200.

Since the fixing part 530 is fixed to the busbar frame 200, the connector 500 may be fixed, and the structural stability may be improved.

As an example of a configuration for efficiently fixing the fixing part 530 to the busbar frame 200, a coupling hole 531 may be defined in the fixing part 530 of the connector 500 according to Embodiment 1 of the present invention.

The coupling hole 531 may be provided in a shape that passes from one side of the fixing part 530 facing the busbar frame 200 to the other side. Here, the coupling hole 531 may be defined to have a substantially circular cross-section to facilitate insertion of the connection member 532.

The connection member 532 may be inserted into the coupling hole 531 defined in the fixing part 530, and the connection member 532 passing through the coupling hole 531 may be coupled to the busbar frame 200. As a result, the connector 500 may be fixed to the busbar frame 200.

The connection member 532 according to Embodiment 1 of the present invention may be a bolt. Thus, a screw thread may be disposed on an inner surface of the coupling hole 531 so that the connection member 532 that is the bolt is inserted to be coupled.

The coupling hole 531 may be defined in the fixing part 530 of the connector 500, and thus, the connector 500 may be efficiently fixed to the busbar frame 200.

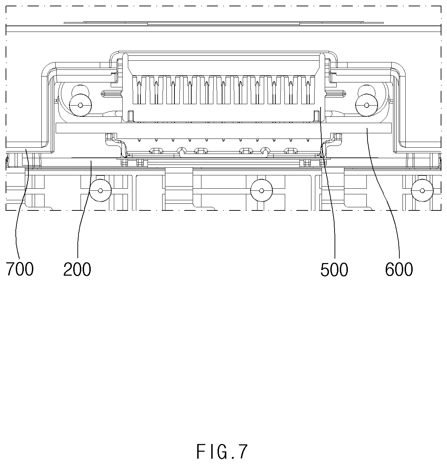

FIG. 7 is a schematic perspective view illustrating a state when a cross-section taken along line B-B' of FIG. 4 is viewed from the front.

As an example of a configuration for protecting the connector 500, the battery module 10 according to Embodiment 1 of the present invention may include the protective plate 600.

The protective plate 600 may be disposed between the circuit board 400 and the connector 500 and may prevent the connector 500 from being deformed due to heat. Specifically, the protective plate 600 may prevent the terminal part 510 of the connector 500 from being deformed or destroyed due to the heat or flame generated from the cell assembly 100 disposed inside the battery module 10.

As an example of a configuration for efficiently protecting the terminal part 510 of the connector 500, the protective plate 600 according to Embodiment 1 of the present invention may include a potting part 610.

The potting part 610 may be disposed at a position corresponding to the portion at which the terminal part 510 of the connector 500 is disposed. Specifically, the terminal 511 of the terminal part 510 may be disposed to extend through the potting part 610. Here, the terminal 511 extending through the potting part 610 may be in contact with the reinforcement plate 410 of the circuit board 400.

The potting part 610 may have a plate shape with a substantially rectangular cross-section and may be provided to have a cross-sectional area greater than or equal to the cross-sectional area of the terminal part 510. Thus, when the potting part 610 is viewed from an opposite side of the terminal part 510, the terminal part 510 may be covered by the potting part 610.

As an example of an efficient method for manufacturing a shape through which the terminal 511 passes, the potting part 610 according to Embodiment 1 of the present invention may be formed through silicon potting. Here, the silicon potting may refer to a process of applying silicon in liquid form to cover electrical components or fill a gap.

If the potting part 610 is formed through the silicon potting, the terminal 511 may be fixed, and an empty space may be efficiently filled at the same time, and thus, efficiency in manufacturing process may be improved.

Silicon used to form the potting part 610 of the protective plate 600 according to Embodiment 1 of the present invention may be highly heat-resistant silicon. Thus, the potting part 610 may be advantageous in withstanding a high temperature, and thus, the terminal part 510 may be prevented or delayed from being deformed or destroyed.

As an example of a configuration for protecting the connector 500, the protective plate 600 of the battery module 10 according to Embodiment 1 of the present invention may further include a metal part 620.

Referring to FIG. 7, the metal part 620 may cover one surface of the connector 500 together with the potting part 610. Specifically, the metal part 620 may cover one surface of the connector 500 facing the potting part 610 together with the potting part 610. Thus, when the metal part 620 is viewed from an opposite side of the connector 500, the connector 500 may be covered by the metal part 620.

The metal part 620 may be made of a metal. Specifically, the metal part 620 may be made of a metal with excellent heat resistance. Thus, the metal part 620 may withstand the high temperatures, and thus, the connector 500 may be prevented from being deformed or delayed due to the high temperature.

The metal part 620 may be provided to have a substantially rectangular cross-section and may be provided to have a cross-sectional area greater than or equal to the cross-sectional area of the connector 500 so as to cover the connector 500.

Since the protective plate 600 includes the metal part 620, the connector 500 may be protected from flame generated inside the battery module 10.

As an example of a configuration for insulation between the components, the battery module 10 according to Embodiment 1 of the present invention may further include an insulating case 700.

The insulating case 700 may be disposed to cover a portion of the connector 500. Specifically, the insulating case 700 may be disposed between the endplate 300 and the busbar frame 200 to cover a portion of the housing 520.

Since the insulating case 700 includes an insulating material, the connector 500 and the busbar may be insulated from other components. Thus, it is possible to prevent unnecessary short circuits, etc. from occurring, and thus, the stability of the battery module 10 may be improved.

The heat and flame may be generated in the cell assembly 100 provided in the battery module 10, and the heat and flame may be spread from the inside of the battery module 10 to the outside. Since the battery module 10 according to Embodiment 1 of the present invention includes the protective plate 600, even if the insulating case 700, etc. is melted by the heat, the protective plate 600 may block the flame, etc. that is directed to the connector 500. Thus, it is possible to prevent the connector 500 from protruding to the outside. In addition, the terminal part 510 of the connector 500 may be protected by the potting part 610 of the protective plate 600. Thus, the battery module 10 according to Embodiment 1 of the present invention may efficiently withstand the high temperatures to increase in time taken to respond to the flam, etc.

### Embodiment 2

The present invention provides a battery module including a different type of protective plate 600' as Embodiment 2.

Hereinafter, a detailed description of the same configuration as that of the battery module 10 according to Embodiment 1 of the present invention will be omitted.

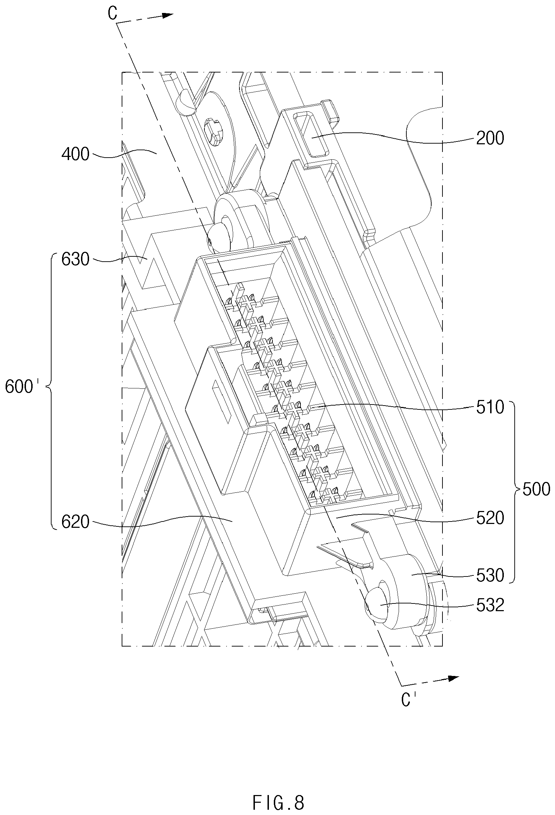

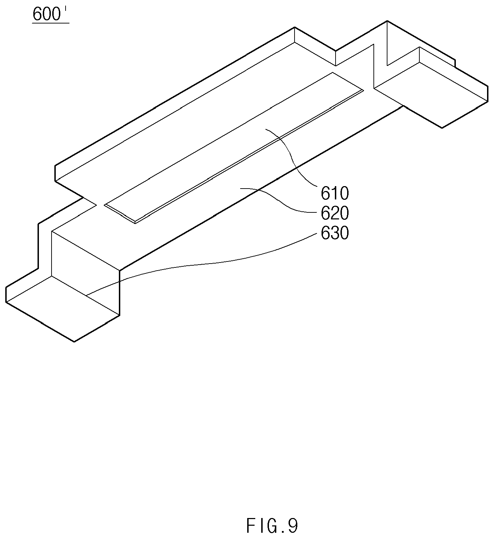

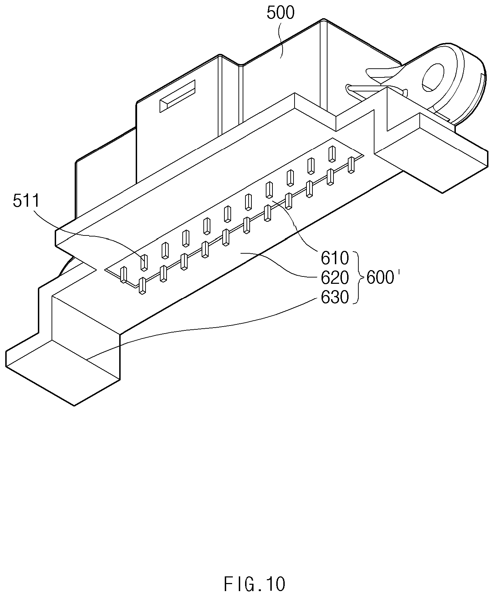

FIG. 8 is a schematic perspective view illustrating a state before an endplate 300 is assembled in a battery module according to Embodiment 2 of the present invention, and FIG. 9 is a schematic perspective view illustrating the protective plate 600' of the battery module according to Embodiment 2 of the present invention. FIG. 10 is a schematic perspective view illustrating a state in which a connector 500 and the protective plate 600' of the battery module are coupled to each other according to Embodiment 2 of the present invention.

As an example of a configuration for efficient protection of the connector 500 from flame, the protective plate 600' of the battery module according to Embodiment 2 of the present invention may further include a bent part 630.

Referring to FIGS. 8 to 10, the bent part 630 may be disposed at each of both ends of a metal part 620. Specifically, the bent part 630 may be disposed to extend from both ends of the metal part 620 in a direction away from a potting part 610.

The bent part 630 may have a bent shape. Referring to FIG. 9, the bent part 630 may include a portion extending in a direction perpendicular to an extension direction of the metal part 620 and a portion provided by being bent in a direction parallel to the extending direction of the metal part 620.

The protective plate 600' according to Embodiment 2 of the present invention may have the same configuration as the protective plate 600 according to Embodiment 1 of the present invention except for the bent part 630.

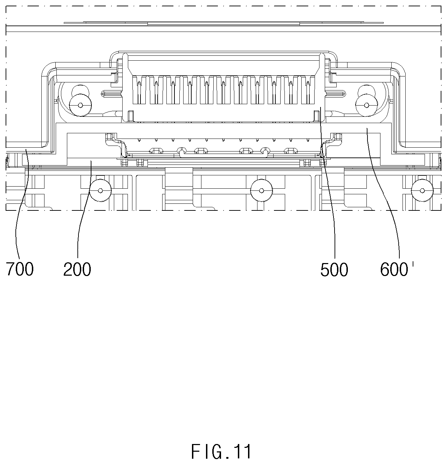

FIG. 11 is a schematic perspective view illustrating a state when a cross-section taken along line C-C' of FIG. 8 is viewed from the front.

Referring to FIG. 11, the protective plate 600' according to Embodiment 2 of the present invention includes the bent part 630 and thus may cover an area greater than that of the protective plate 600 according to Embodiment 1 of the present invention.

As an example of a configuration for efficient protection of the connector 500 from flame, an endplate 300 of the battery module according to Embodiment 2 of the present invention may be bent into a shape corresponding to the bent part 630. Specifically, a portion of the endplate 300 disposed at a position corresponding to the bent part 630 may be bent into a shape corresponding to the bent part 630. Hereinafter, the portion of the endplate 300, which is bent into the shape corresponding to the bent part 630 is referred to as a corresponding part 310 (see FIG. 3).

Referring to FIG. 11, the corresponding part 310 of the endplate 300 and the bent part 630 of the protective plate 600' may be bent into corresponding shapes with the insulating case 700 therebetween. Therefore, even if the insulating case 700 is melted by flame generated inside the battery module, the bent part 630 of the protective plate 600' may be caught on the corresponding part 310 of the endplate 300 to efficiently cover the connector 500 from the flame.

Hereinafter, the corresponding part 310 of the endplate 300, which is bent into the shape corresponding to the bent part 630 of the protective plate 600', will be described in more detail.

As an example of the corresponding part 310 of the endplate 300, the corresponding part 310 of the endplate 300 may be a coupling member for connection to a frame 800 or a busbar frame 200.

As described above, the frame 800 may refer to a case surrounding a cell assembly 100 (see FIG. 1). Here, the endplate 300 may be coupled to the frame 800 surrounding an outer surface of the cell assembly 100 to protect the cell assembly 100. That is, the endplate 300 may protect the cell assembly 100 from the outside together with the frame 800. In addition, since the busbar frame 200 is disposed between the endplate 300 and the cell assembly 100, the endplate 300 may protect the busbar frame 200 from the outside.

The coupling member of the endplate 300 may be assembled with additional components such as a bolt and a nut to couple the endplate 300 to the frame 800 or the busbar frame 200. Here, the corresponding part 310 of the endplate 300, which serves as the coupling member, may be disposed on each of both sides of the connector 500 (see FIG. 3).

As another example of the corresponding part 310 of the endplate 300, the corresponding part 310 of the endplate 300 may be a connection member through which a terminal (not shown) of the cell assembly 100 passes. Here, the terminal of the cell assembly 100 may mean a configuration different from the terminal 511 provided in the terminal part 510 of the connector 500 described above. Specifically, the terminal of the cell assembly 100 may be referred to as a configuration for electrically connecting the cell assembly 100 to the outside.

In order to electrically connect the cell assembly 100 to the outside, the terminal of the cell assembly 100 may pass through the endplate 300. Here, the corresponding part 310 of the endplate 300 may be a passage through which the terminal of the cell assembly 100 passes. Here, the corresponding part 310 of the endplate 300, which serves as the connection member, may be disposed at each of both sides of the connector 500 (see FIG. 3).

As explained in the previous examples, the endplate 300 may essentially include the corresponding part 310. Thus, the protective plate 600' including the bent part 630 may be disposed to be caught on the endplate 300. Specifically, even if force directed toward the connector 500 is applied to the protective plate 600', physical movement of the protective plate 600' including the bent part 630 may be restricted. That is, since the protective plate 600' is physically caught by the endplate 300, movement of the protective plate 600' in the direction toward the connector 500 may be restricted.

The corresponding part 310 of the endplate 300 disposed on each of both the sides of the connector 500 may have a shape corresponding to the bent part 630 of the protective plate 600', as described above. That is, the bent part 630 of the protective plate 600' has a bent shape so that the bent part 630 is caught by the corresponding part 310 of the endplate 300. Thus, even if the insulating case 700 is melted by the flame, the bent part 630 of the protective plate 600' may be caught on the corresponding part 310 of the endplate 300 and be maintained in the shape that is disposed between the flame and the connector 500. Specifically, the protective plate 600' may withstand a pressure acting toward the connector 500 from an opposite side of the connector 500. That is, the protective plate 600' may be fixed even when the pressure toward the connector 500 is generated by a gas generated by fire, etc.

The protective plate 600' of the battery module according to Embodiment 2 of the present invention may include a bent part 630, and the endplate 300 may be bent into a shape corresponding to the bent part 630, and thus, structural stability of the protective plate 600' may be improved. Therefore, it is possible to effectively prevent the flame from spreading to the outside, thereby delaying the spread of the flame to other battery modules. In addition, the protective plate 600' may effectively prevent or delay the connector 500 from being destroyed by the flame.

While Embodiments of the present invention have been described with reference to the specific embodiments, it will be apparent to those skilled in the art that various changes and modifications may be made without departing from the spirit and scope of the invention as defined in the following claims.

### [Description of the Symbols]

- 10:: Battery module
- 100:: Cell assembly
- 200:: Busbar frame
- 300:: Endplate
- 310:: Corresponding part
- 400:: Circuit board
- 410:: Reinforcement plate
- 500:: Connector
- 510:: Terminal part
- 511:: Terminal
- 520:: Housing
- 530:: Fixing part
- 531:: Coupling hole
- 532:: Connection member
- 600, 600':: Protective plate
- 610:: Potting part
- 620:: Metal part
- 630:: Bent part
- 700:: Insulating case
- 800:: Frame

## Claims

1. A battery module comprising:
cell assemblies, each of which comprises a plurality of cells;
a busbar frame on which a busbar configured to electrically connect the cell assemblies to each other is disposed;
an endplate disposed on each of both ends of the cell assembly to cover the busbar frame;
a circuit board that is in contact with the busbar so as to be electrically connected to the cell assembly;
a connector configured to electrically connect the circuit board to the outside; and
a protective plate disposed between the circuit board and the connector to protect the connector from being deformed due to heat.

2. The battery module of claim 1, wherein the connector comprises:
a terminal part comprising a plurality of terminals that are in contact with the circuit board so as to perform electrical connection; and
a housing configured to cover a side surface of the terminal part.

3. The battery module of claim 2, further comprising an insulating case comprising an insulating material and disposed between the endplate and the busbar frame to cover a portion of the housing.

4. The battery module of claim 2, wherein the protective plate comprises a potting part disposed at a position corresponding to a portion at which the terminal part is disposed, and
the terminal extends to pass through the potting part.

5. The battery module of claim 4, wherein the potting part is formed through silicon potting.

6. The battery module of claim 4, wherein the protective plate further comprises a metal part configured to cover one surface of the connector, which faces the potting part, together with the potting part.

7. The battery module of claim 6, wherein the protective plate further comprises a bent part disposed on each of both ends of the metal part and having a bent shape.

8. The battery module of claim **7,** wherein the end plate comprises a corresponding part disposed at a position corresponding to the bent part and bent in a shape corresponding to the bent part.

9. The battery module of claim 2, wherein the circuit board comprises a reinforcement plate that is in contact with the terminal and disposed on one surface facing the protective plate.

10. The battery module of claim 2, wherein the connector further comprises a fixing part connected to both ends of the housing and fixed to the busbar frame.

11. The battery module of claim 10, wherein the fixing part has a coupling hole that passes from one surface facing the busbar frame to the other surface,
wherein the fixing part is fixed to the busbar frame while a connection member is inserted into the coupling hole.

12. The battery module of claim 1, wherein the circuit board comprises a printed circuit board.

13. The battery module of claim 12, wherein the circuit board comprises a flexible printed circuit board.

14. The battery module of claim 8, wherein the bent part is disposed to be caught on the corresponding part so as to be prevented from moving toward the connector.
